# EUROPEAN PATENT APPLICATION

(11) **EP 4 737 362 A1**
(43) Date of publication of application: **06.05.2026**
(21) Application number: 25209187.1
(22) Date of filing: 16.10.2025
(51) Int. Cl.: B65G 54/02, B65B 43/46, H02K 41/03

(54) **PLANT WITH PRODUCT TRANSPORT STATION AND EXCHANGE STATION**

(30) Priority: 21.10.2024 IT 202400023394
(71) Applicant: G.D S.p.A., 40133 Bologna (BO) (IT)
(72) Inventor: VIGNALI, Matteo, I-40133 BOLOGNA (IT); RONCHETTI, Marco, I-40133 BOLOGNA (IT); BIONDI, Andrea, I-40133 BOLOGNA (IT)
(74) Representative: Gamba, Alessandro

(57) **Abstract**

A plant (1) for supplying and filling a product (P) comprising a product transport station (2).

Said product transport station (2) comprises a product movement system (3) and at least one carriage (4).

The product movement system (3) comprises at least one main track (30) and at least one auxiliary track (39) positioned spaced apart from the main track (30), wherein the auxiliary track (39) has the same shape as the main track (30).

The product movement system (3) comprises a control device (31) for producing localized magnetic fields.

Each carriage (4) comprises sliding means (40) comprising at least one base body (401) slidingly engageable with the main track (30) or the auxiliary track (39), a control plate (41), engaged with the base body (401), facing the control device (31), comprising a magnetically sensitive element (410), and at least one transport device (45) for supporting a product (P).

The plant (1) comprises a carriage exchange station (8) positioned at one end of the product movement system (3), wherein the carriage exchange station (8) comprises at least one exchange track (80) on which the carriage (4) is movable and comprises movement means (85) suitable for moving the exchange track (80) between a position in which it is aligned with the main track (30) and a position in which it is aligned with the auxiliary track (39).

## Description

The present invention relates to a plant.

In particular, said plant is suitable for supplying and/or filling a product.

Specifically, the technical field to which the present invention pertains is that of the packaging, transport and filling industry of products in the food sector. Alternatively, the technical field to which the present invention pertains is that of the packaging and filling industry of products in the pharmaceutical field.

In particular, in the present discussion, the term "products" generically refers to containers of soft shape or rigid shape or semi-soft (or semi-rigid) shape adapted to contain a product, a foodstuff or a pharmaceutical product. Preferably, said foodstuff or pharmaceutical product is fluid or bulk.

According to a preferred embodiment of the plant, the "product" is a bag.

Known plants are adapted to operate and handle large quantities of products at high speeds, even in the order of hundreds of products per minute.

In particular, the plants comprise specific transport systems adapted to move the products; it is also known that during said movements, by means of further specific systems included in the plant, specific operations are carried out on the products, for example filling operations.

In this technical field, it is therefore required to have plants in which high speeds of product movements are achieved, together with high accuracies in performing said movements, in addition to exhibiting high accuracies of product positioning and/or dwelling. In particular, "accuracy" means the performance of operations in which desired geodetic positionings are executed and/or in which positionings and movements are executed according to desired timings.

In the prior art, solutions of plants are known in which a compromise has been sought between the above-mentioned requirements, for example sacrificing speed for accuracy.

The purpose of the present invention is to propose a plant that meets all the needs of the technical field, effectively solving all the above-mentioned problems. In other words, the purpose of the present invention is to provide a plant in which the products are transported both efficiently and effectively, thus achieving high speeds and high accuracies.

Said purpose is achieved by a plant in accordance with claim 1. The claims dependent thereon seek protection for further features and involve further technical advantages.

That is to say, the purpose of the present invention is achieved by a plant for supplying and/or filling a product, preferably a bag.

Preferably, the plant comprises a product transport station extending with respect to a longitudinal axis, a vertical axis, and a transverse axis.

Preferably, the plant comprises a product movement system.

Preferably, the product movement system comprises at least one main track, which extends longitudinally in a rectilinear manner.

Preferably, the product movement system comprises at least one auxiliary track having the same shape as the main track.

Preferably, the auxiliary track is positioned vertically spaced from the main track.

Preferably, the auxiliary track is positioned transversely spaced from the main track.

Preferably, the movement system comprises a control device, preferably extending longitudinally, being suitable for producing localized magnetic fields.

Preferably, the product transport station comprises at least one carriage.

Preferably, each carriage comprises sliding means.

Preferably, the sliding means comprise at least one base body slidingly engaged with a track.

Preferably, each carriage comprises a control plate, engaged with the base body.

Preferably, the control plate is positioned transversely spaced facing the control device.

Preferably, the control plate comprises a magnetically sensitive element stressable and movable by a magnetic field produced by the control device.

Preferably, each carriage comprises at least one transport device suitable for supporting a product in transport.

Preferably, said transport device is engaged with the base body and/or with the control plate.

Preferably, the plant comprises a carriage exchange station positioned at one end of the product movement system.

Preferably, the carriage exchange station comprises at least one exchange track on which the carriage is movable.

Preferably, the carriage exchange station comprises movement means suitable for moving the exchange track between a position in which it is aligned with the main track and a position in which it is aligned with the auxiliary track.

In addition, further features and advantages of the invention will appear from the following description of its preferred embodiments, given by way of non-limiting example, with reference to the accompanying figures, in which:

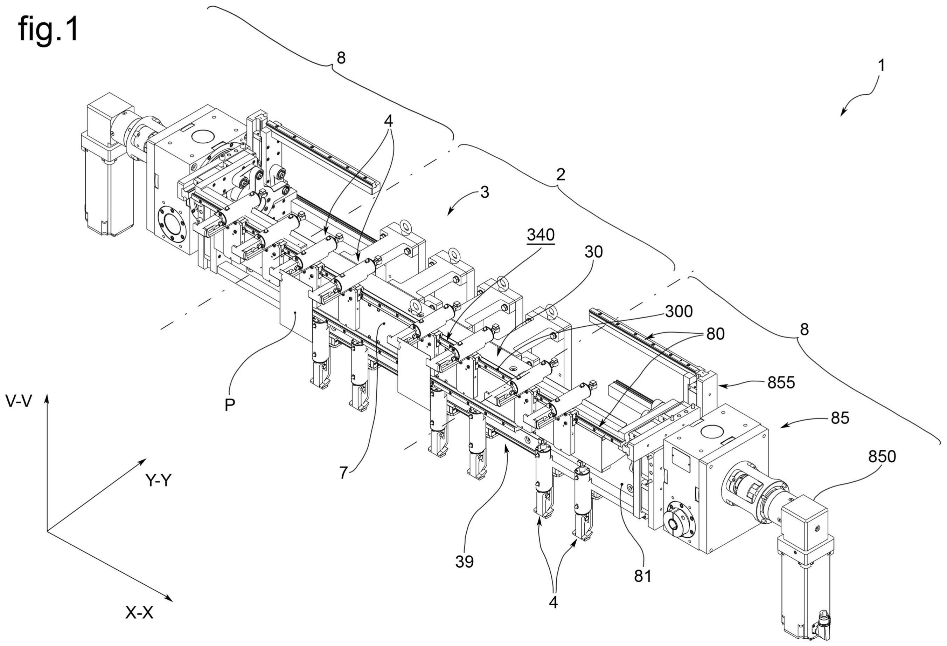

- Figure 1 shows a perspective view of a plant according to the present invention, in accordance with a first embodiment, in a first operating configuration;

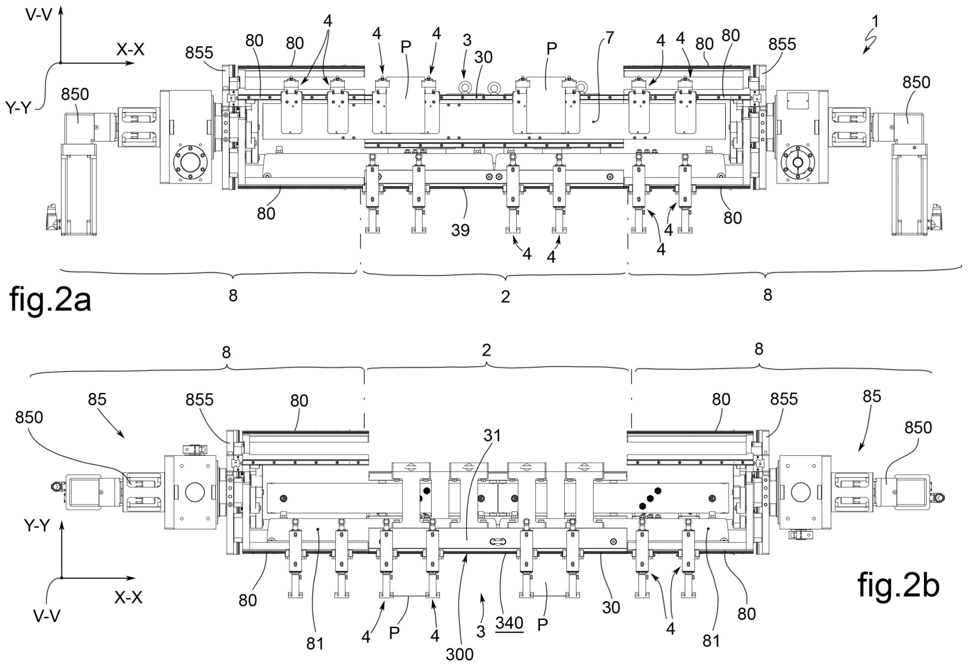

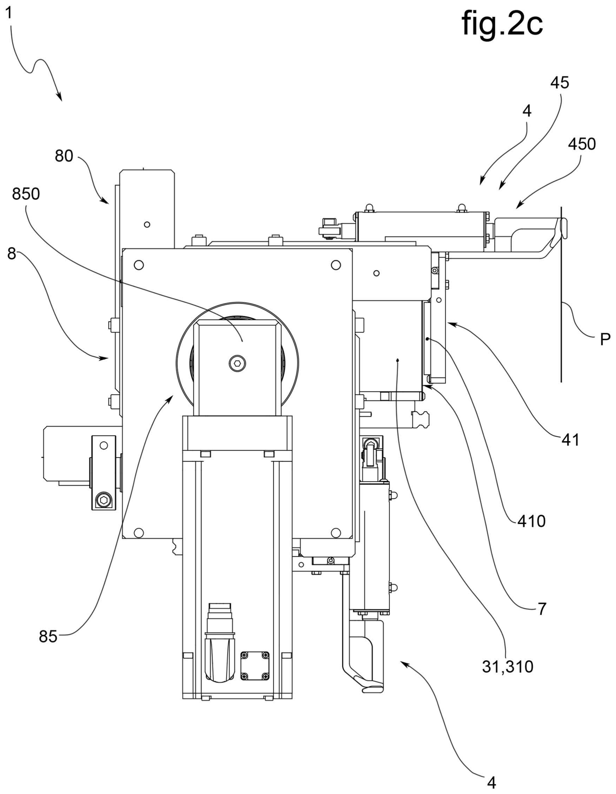

- Figures 2a, 2b and 2c are respectively a front view, a top view and a side view of the plant of figure 1;

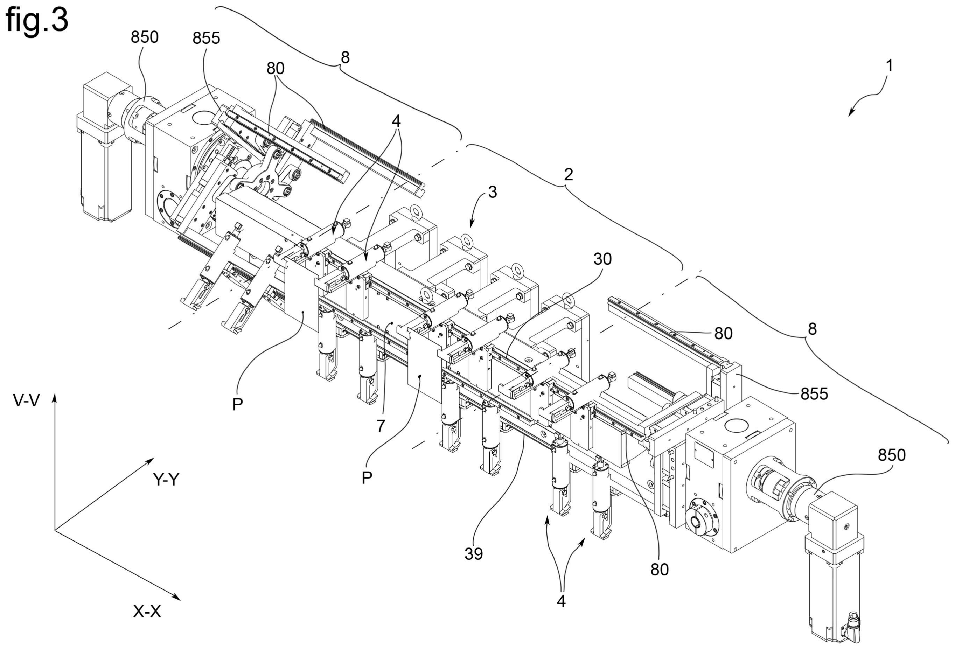

- Figure 3 shows a perspective view of a plant according to the present invention, in accordance with a first embodiment, in a further operating configuration;

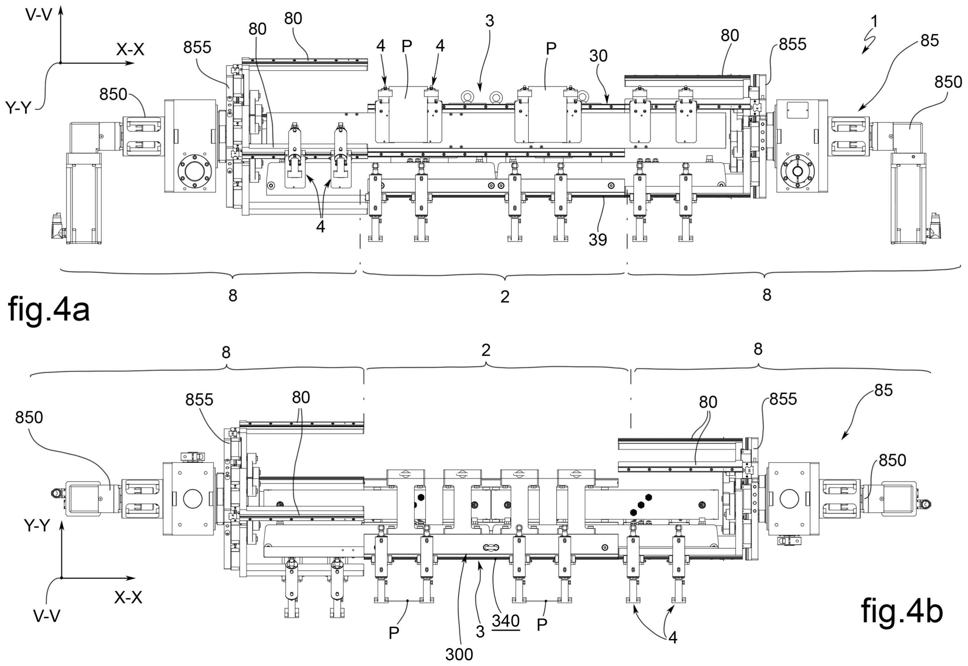

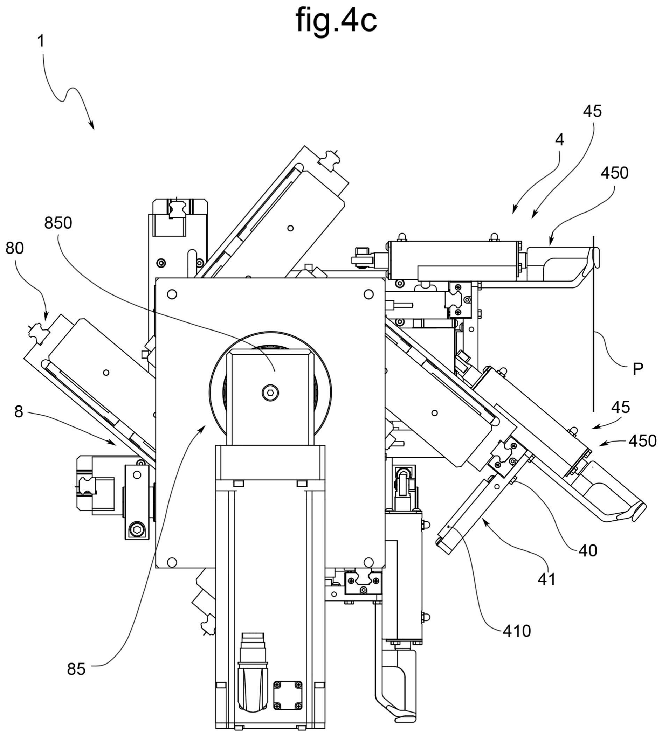

- Figures 4a, 4b and 4c are respectively a front view, a top view and a side view of the plant of figure 3;

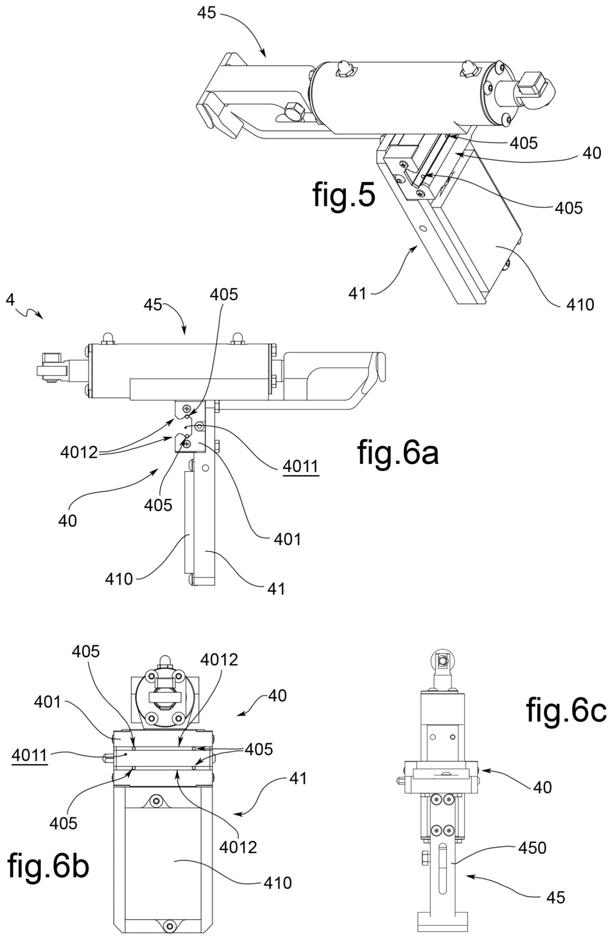

- Figure 5 is a perspective view of a carriage included in the plant of figure 1;
- Figures 6a, 6b e 6c are respectively a side view, a rear view and a top view of the carriage of figure 5;

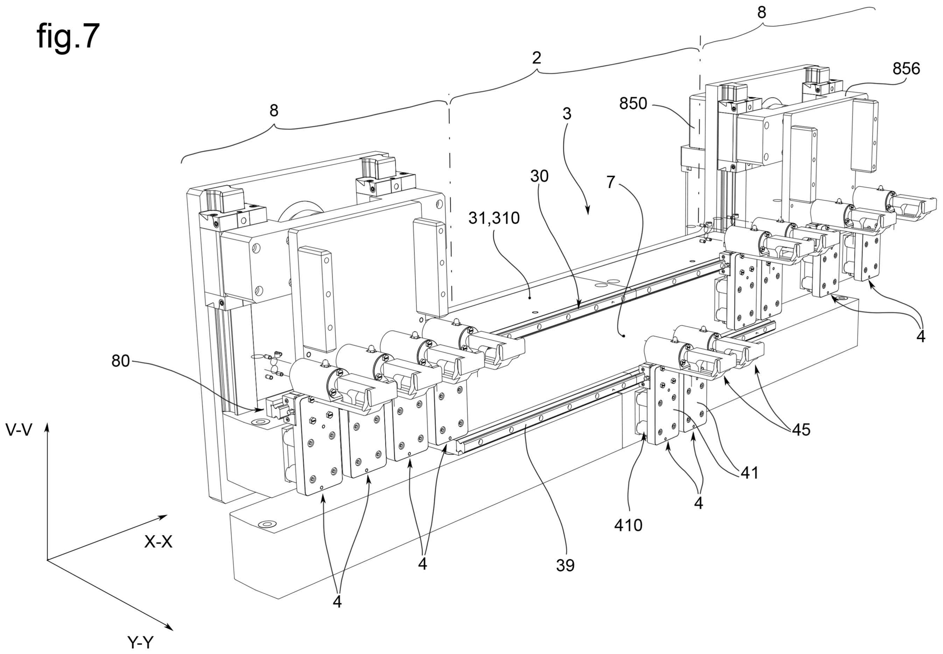

- Figure 7 shows a perspective view of a plant according to the present invention, in accordance with a second embodiment, in a first operating configuration;

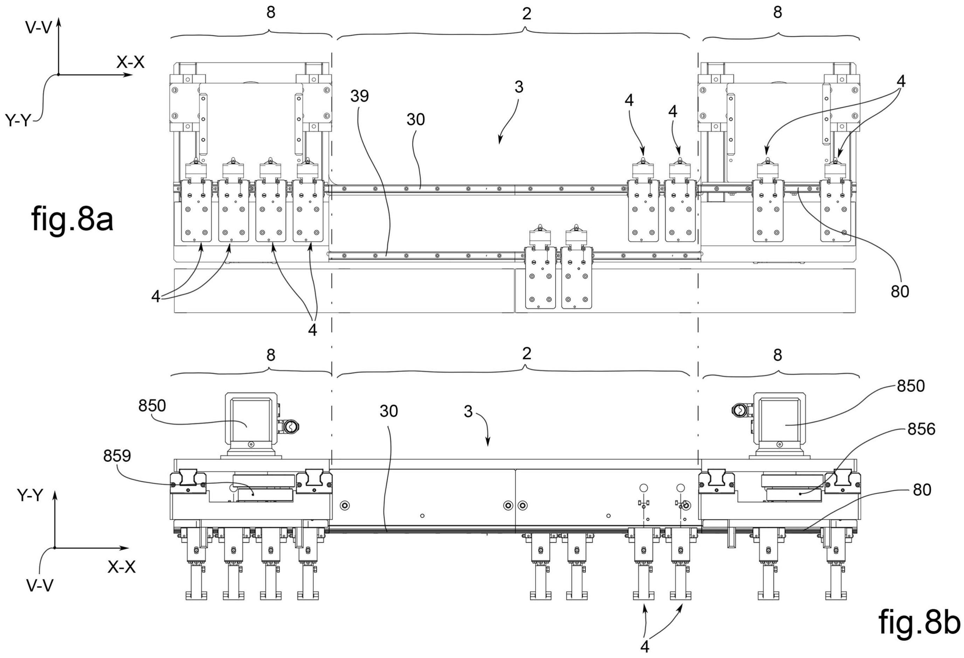

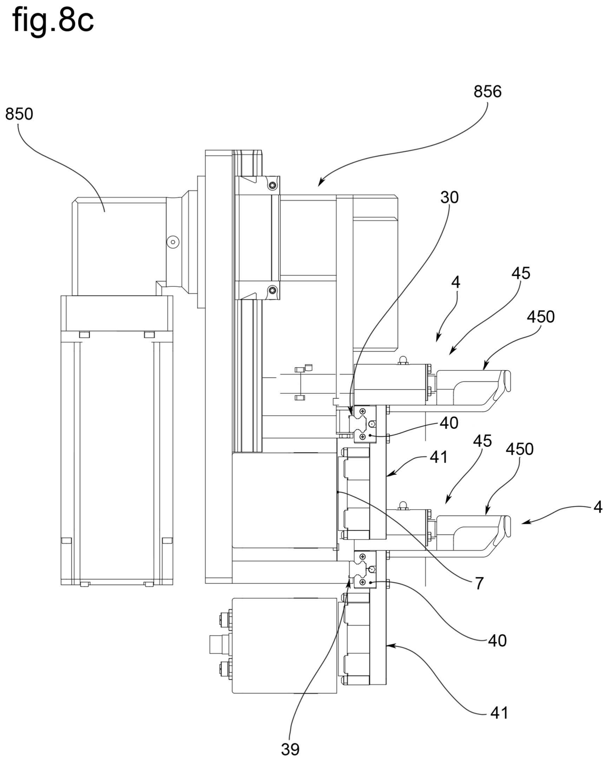

- Figures 8a, 8b e 8c are respectively a front view, a top view and a side view of the plant of figure 7;

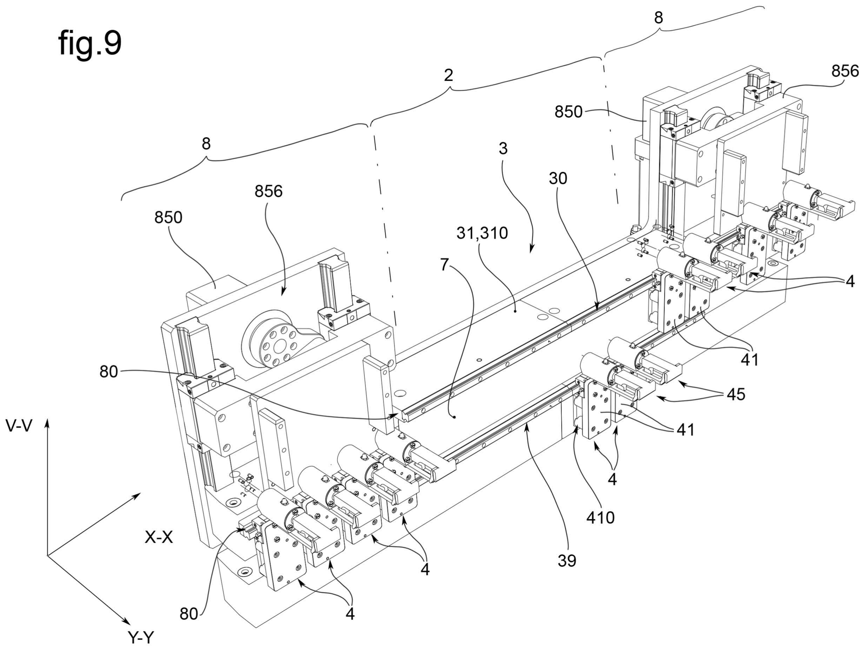

- Figure 9 shows a perspective view of a plant according to the present invention, in accordance with a second embodiment, in a further operating configuration;

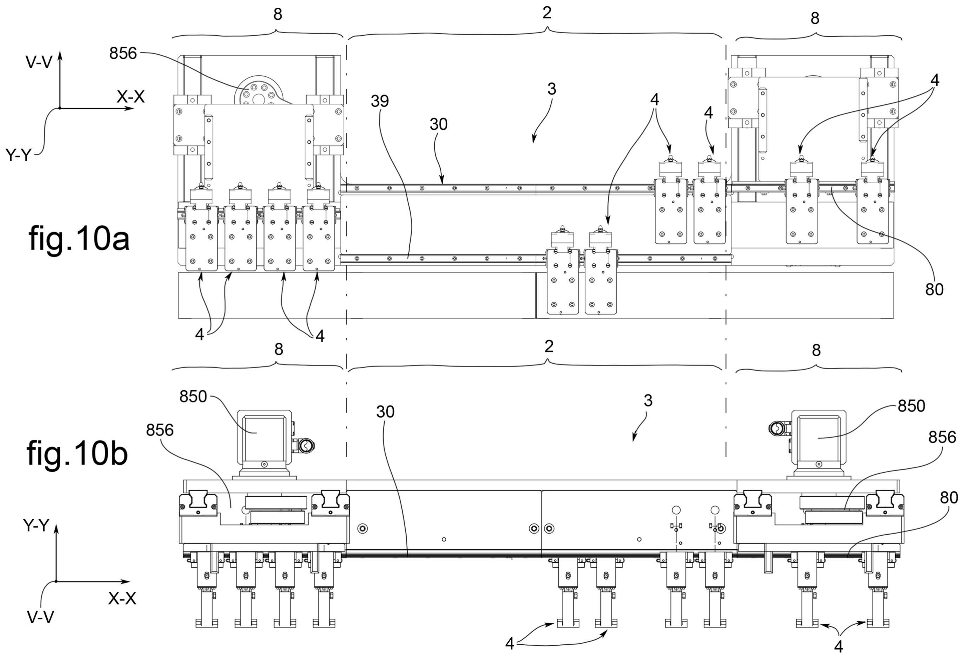

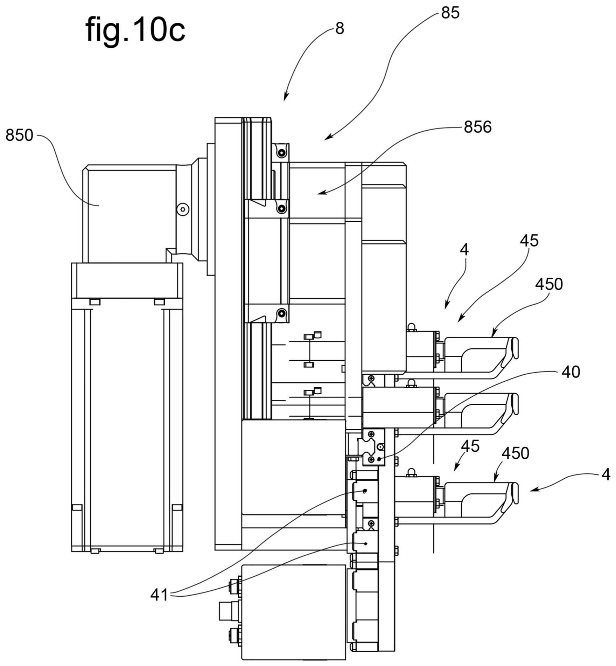

- Figures 10a, 10b e 10c are respectively a front view, a top view and a side view of the plant of figure 9;

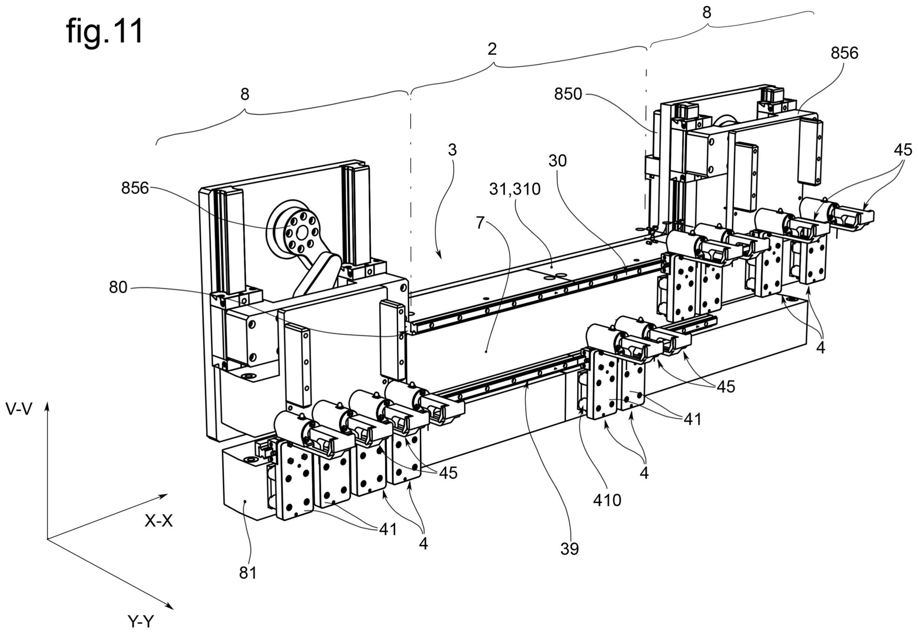

- Figure 11 shows a perspective view of a plant according to the present invention, in accordance with a second embodiment, in a still further operating configuration;

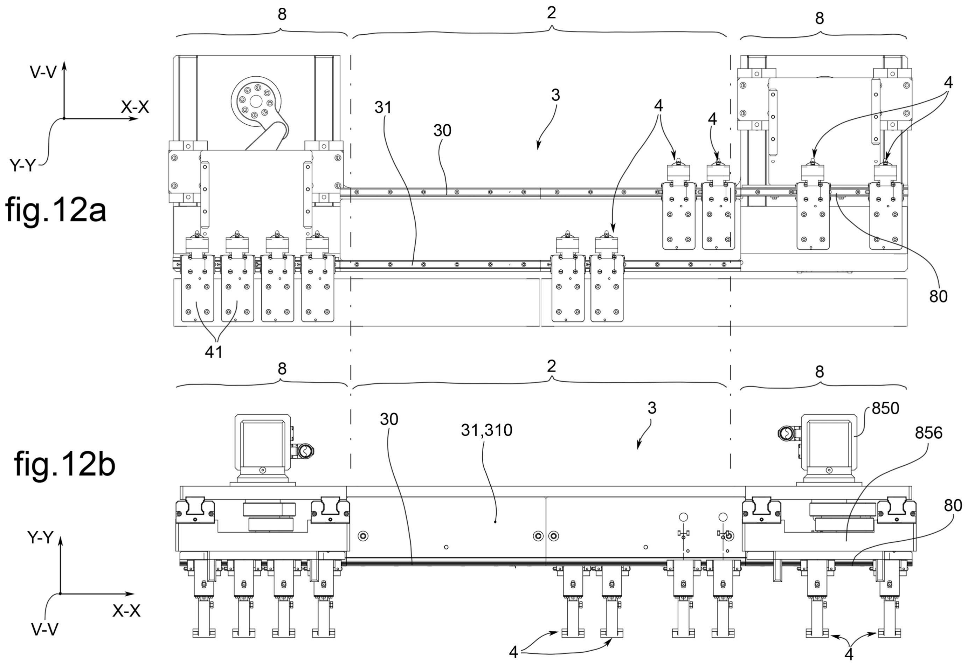

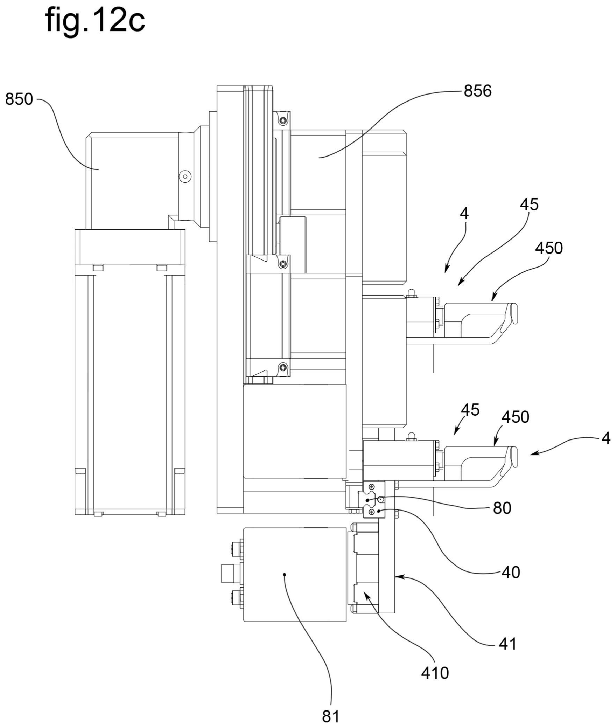

- Figures 12a, 12b e 12c are respectively a front view, a top view and a side view of the plant of figure 11.

With reference to the accompanying figures, number 1 denotes a plant in accordance with the present invention.

According to a preferred embodiment, the plant 1 is suitable for supplying and/or filling a product P. Preferably, said product P is a bag. The dimensions or measurements of the product P do not limit the present invention. On the contrary, the plant 1 of the present invention is suitable for adapting itself in an extremely versatile manner to requirements, being suitable for operating with products of different dimensions.

In accordance with the present invention, the plant 1 comprises a product transport station 2. As will be extensively described hereinafter, said product transport station 2 is suitable for moving the products P.

Said product transport station 2 extends with respect to a longitudinal axis X-X, a vertical axis V-V and a transverse axis Y-Y. Preferably, the longitudinal axis X-X and the transverse axis Y-Y lie, orthogonal to each other, on a plane substantially parallel to a horizontal plane, for example the ground plane. Preferably, the vertical axis V-V is orthogonal to both the longitudinal axis X-X and the transverse axis Y-Y.

Preferably, facing the product transport station 2, the plant 1 is adapted to comprise operating stations suitable for performing specific operations on the products P in transport on the product transport station 2: for example, the plant 1 comprises a filling station.

The presence or the type of said operating stations is not limiting for the purposes of the present invention.

In accordance with the present invention, the product transport station 2 extends longitudinally as a function of the requirements, that is, depending on the possible operations to be carried out on the products.

In accordance with the present invention, the product transport station 2 comprises a product movement system 3 and at least one carriage 4, preferably a plurality of carriages 4, suitable for supporting a product P during transport and for being moved on said product movement system 3.

Preferably, the components described as belonging to the product movement system 3 are positioned in a fixed relative position, and the carriages 4 are moved on said product movement system 3.

The product movement system 3 comprises at least one main track 30.

Preferably, the product movement system 3 comprises two main tracks 30 spaced from one another.

According to a preferred embodiment, the main track 30, preferably each main track 30, extends longitudinally in a rectilinear manner.

In other words, the main track 30 extends along a straight line parallel to the longitudinal axis X-X.

According to a preferred embodiment, the main track 30 has a substantially rectangular section comprising transverse main track surfaces 300, vertically spaced apart.

According to a preferred embodiment, each transverse main track surface 300 comprises a longitudinal track slot 340.

In accordance with the invention, the product movement system 3 comprises a control device 31 suitable for controlling the movement of the carriages 4.

In particular, the control device 31 extends longitudinally, that is, parallel to the main track 30.

In particular, the control device 31 is suitable for producing localized magnetic fields. That is to say, the control device 31 is suitable for producing localized magnetic fields along the longitudinal axis X-X. As will be extensively described below, the presence or absence of said magnetic fields will cause the longitudinal movement of the carriages 4.

According to a preferred embodiment, the control device 31 comprises a plurality of control members 310 aligned longitudinally with one another.

Preferably, each control member 310 is suitable for producing a respective magnetic field.

Preferably, in fact, the control device 31 comprises a control unit suitable for controlling the switching on and/or off of each control member 310 so as to create the respective magnetic fields.

According to a preferred embodiment, the control device 31 is suitable for moving the carriages 4 in the longitudinal direction, depending on the requirements, that is, depending on the operations of the operating station, both in a main direction and in a reverse direction.

In accordance with the present invention, each carriage 4 comprises sliding means 40 suitable for slidingly engaging a main track 30. In the embodiment with a double main track 30, the sliding means 40 are suitable for slidingly engaging both main tracks 30.

In particular, said sliding means 40 comprise a base body 401 comprising a track housing 4011 in which the main track 30 is housed. In the embodiment with a double main track 30, the sliding means 40 comprise two base bodies 401.

According to a preferred embodiment, the sliding means 40 further comprise rolling elements suitable for sliding on the main track 30.

Preferably, the sliding means 40 comprise a plurality of sliding balls 405 housed in the base body 401, suitable for sliding on the main track 30.

Preferably, said sliding balls 405 are suitable for sliding in respective longitudinal track slots 340.

According to a preferred embodiment, the sliding means 40 comprise a plurality of pairs of sliding balls 405 longitudinally spaced apart: preferably, each sliding ball 405 of a pair is slidingly housed in the longitudinal track slot 340.

According to a preferred embodiment, the track housing 4011 comprises transverse body surfaces 4012 facing the transverse main track surfaces 300, and said sliding balls 405 are housed in the base body 401 protruding from the transverse body surfaces 4012 so as to be slidingly housed in the longitudinal track slots 340.

Preferably, therefore, the track housing 4011 has a section substantially complementary to the shape of the main track 30.

According to a preferred embodiment, the base body 401 is coupled to the main track 30 in such a manner as to be slidable only in the longitudinal direction. That is to say, the base body 401 is coupled to the main track 30 in such a way as not to be slidable in the transverse direction. According to a preferred embodiment, the presence of the sliding balls 405 at least partially housed in the longitudinal track slots 340 is such as to retain the base body 401, and thus the carriage 4, on the main track 30.

Furthermore, according to the present invention, each carriage 4 comprises a control plate 41 positioned transversely spaced facing the control device 31. Said control plate 41 comprises a magnetically sensitive element 410 stressable and movable by a magnetic field produced by the control device 31.

Preferably, the control plate 41 is engaged with the base body 401.

Preferably, in the embodiment with double main track 30 and therefore with two base bodies 401, the control plate 41 is engaged with both base bodies 401.

Preferably, the magnetically sensitive element 410 is a passive element, suitable for being stressed by a magnetic field.

Preferably, the magnetically sensitive element 410 is an element made of ferromagnetic material.

According to a preferred embodiment, each carriage 4 further comprises at least one transport device 45 suitable for supporting a product P during transport.

In accordance with a preferred embodiment, the transport device 45 comprises at least one transport member 450 suitable for operating on the product P.

Preferably, the transport member 450 is a gripper assembly suitable for retaining or gripping the product P, preferably a bag.

In further embodiment variants, the transport member 450 is a transport tray.

According to a preferred embodiment, the transport device 45 comprises two transport members 450 suitable for operating in two longitudinally spaced regions of the same product P. For example, according to a preferred embodiment, the two transport members 450 are two gripper assemblies suitable for gripping the product P, preferably a bag, in two longitudinally spaced regions.

In accordance with a preferred embodiment, the transport device 45 is engaged with the base body 401.

In accordance with a preferred embodiment, the transport device 45 is engaged with the control plate 41.

In accordance with a preferred embodiment, the transport device 45 is engaged with the base body 401 and with the control plate 41.

According to a preferred embodiment, each product movement system 3 comprises at least two carriages 4 movable independently of each other.

According to a preferred embodiment, the product transport station 2 further comprises a protective shield 7 positioned facing the control device 31, in such a way as to be located between the control plate 41 of a carriage 4 and said control device 31.

Preferably, the protective shield 7 is therefore positioned in the gap between the control members 310 and the magnetically sensitive element 410.

Preferably, the protective shield 7 is thus suitable for protecting the control device 31, and therefore the possible electronic components inside it, from dirt, for example from food, and/or from impacts.

According to a preferred embodiment, the protective shield 7 is also suitable for providing a sliding support surface for the carriage 4.

According to a preferred embodiment, said protective shield 7 is made of a non-magnetic and nontoxic material.

Preferably, the protective shield 7 is made of a polymer material.

According to a preferred embodiment, the protective shield 7 has a thickness comprised between 0.1 and 2 millimeters, preferably from 0.1 to 1 millimeters and even more preferably from 0.1 to 0.5 millimeters.

According to a preferred embodiment, the product movement system 3 comprises at least one auxiliary track 39 positioned spaced apart from the main track 30.

According to a preferred embodiment, the auxiliary track 39 is positioned vertically spaced from the main track 30.

According to a preferred embodiment, the auxiliary track 39 is positioned transversely spaced from the main track 30.

According to a preferred embodiment, the auxiliary track 39 is positioned both vertically and transversely spaced from the main track 30.

According to a preferred embodiment, said auxiliary track 39 has the function of providing a return path for the carriage 4.

In other words, a carriage 4 is suitable for moving along the main track 30 in a first longitudinal direction, forward, and is also suitable for moving along the auxiliary track 39 in a second longitudinal direction, return.

In the embodiment in which the product movement system 3 there are two main tracks 30, the product movement system 3 also comprises two auxiliary tracks 39.

According to a preferred embodiment, the auxiliary track 39 has the same characteristics described above with reference to the main track 30. For example, the auxiliary track 39 also extends in a rectilinear manner. For example, the auxiliary track 39 has the same shape as the main track 30. For example, the auxiliary track 39 also comprises longitudinal slots.

According to the present invention, the plant 1 further comprises a carriage exchange station 8 positioned at one end of the product movement system 3, suitable for taking a carriage 4 from the main track 30 and moving it to the auxiliary track 39.

According to a preferred embodiment, the plant comprises a plurality of consecutive product movement systems 3 each with respective carriage exchange stations 8.

According to a preferred embodiment, the plant 1 comprises a pair of carriage exchange stations 8 positioned at the respective ends of the product movement system 3, respectively suitable for taking a carriage 4 from the main track 30 to move it to the auxiliary track 39 and vice versa.

According to a preferred embodiment, the carriage exchange station 8 comprises at least one exchange track 80 on which the carriage 4 is movable. In the embodiment with two main tracks 30, the carriage exchange station 8 comprises at least two exchange tracks 80.

According to a preferred embodiment, the exchange track 80 has the same characteristics described above with reference to the main track 30 (and to the auxiliary track 39). For example, the exchange track 80 also extends in a rectilinear manner. For example, the exchange track 80 has the same shape as the main track 30. For example, the exchange track 80 also comprises longitudinal slots.

According to a preferred embodiment, the carriage exchange station 8 comprises movement means 85 suitable for moving the exchange track 80 between a position in which it is aligned with the main track 30 and a position in which it is aligned with the auxiliary track 39.

According to a preferred embodiment, said movement means 85 rotate the exchange track 80. Preferably, said movement means 85 move the exchange track 80 in roto-translation.

According to a preferred embodiment, the carriage exchange station 8 comprises a plurality of, at least two, exchange tracks 80 in such a way that while one exchange track 80 is aligned with the main track 30, an additional exchange track 80 is aligned with the auxiliary track 39.

For example, according to a preferred embodiment, the carriage exchange station 8 comprises four exchange tracks 80 and the movement means 85 are suitable for rotating by 90° to align one exchange track 80 with the main track 30.

According to a preferred embodiment, the movement means 85 comprise a motor assembly 850, preferably electric, and a rotatable carousel 855 operatively connected to said electric motor assembly 850. Preferably, on said carousel 855 the respective exchange tracks 80 are housed. Preferably, said carousel 855 also moves the exchange tracks 80 translationally, for example in the radial direction.

According to a preferred embodiment, said movement means 85 move the exchange track 80 translationally.

According to a preferred embodiment, the movement means 85 comprise a motor assembly 850, preferably electric, and a translation assembly 856, operatively connected to said electric motor assembly 850, suitable for transforming the rotary motion of the electric motor assembly 850 into alternating linear motion. Preferably, the respective exchange tracks 80 are housed on said translation assembly 856.

According to a preferred embodiment, the translation assembly 856 comprises a linear slide and a crank-type member suitable for moving said linear slide in vertical alternating motion.

According to a preferred embodiment, the carriage exchange station 8 comprises an exchange control device 81 which extends longitudinally and is suitable for moving a respective carriage 4 from a main track 30 to the exchange track 80 or from the exchange track 80 to the auxiliary track 39.

According to a preferred embodiment, each exchange control device 81 is thus suitable for moving a carriage 4 in sliding motion.

Preferably, the exchange control device 81 is also suitable for producing localized magnetic fields by means of which the carriages 4 are moved.

According to a preferred embodiment, the control device 31 and the exchange control device 81 are the same component extending longitudinally in continuity. According to a preferred embodiment, the protective shield 7 extends longitudinally in such a way as to also face the exchange control device 81.

According to a preferred embodiment, the movements along the auxiliary track 39, or return path, are also obtained by means of a dedicated return control device suitable for generating specific magnetic fields for moving the carriages 4.

According to a preferred embodiment, the product transport station 3 and the carriage exchange stations 8 at its ends define a substantially closed path for the carriages 4: that is to say, each carriage 4 is controlled to move in a closed cycle along the main track 30, on a respective exchange track 80, on the auxiliary track 39, on a respective exchange track 80, and back again onto the main track 30.

According to a preferred embodiment, the sliding balls 405 are always housed between the respective base body 401 and the longitudinal slots made on the main track 30, the exchange track 80, and the auxiliary track 39.

It is specified that several possible components or groups of components of the plant are not shown in the accompanying figures. The presence of said unshown components does not limit the present invention. For example, the base frame resting on a base plane of the plant is not shown.

Innovatively, the plant fully achieves the intended purpose by overcoming the typical problems of the known art.

Advantageously, the plant is suitable for moving the carriages, and thus the products, efficiently and effectively.

Advantageously, the plant is suitable for moving the carriages with speed and precision.

Advantageously, the sliding means are designed to effectively support the products on the respective track.

Advantageously, the sliding means are designed to always remain engaged with a respective track.

Advantageously, the control device is protected from dirt and/or possible impacts.

Advantageously, the plant is extremely flexible, being adaptable to different product formats.

Advantageously, the plant is compact in size.

Advantageously, the carriage exchange station is suitable for performing movements in a simple and repeatable manner over time.

Advantageously, the plant allows the movement of products with a greater weight compared to known plant solutions without compromising speed.

It is clear that a person skilled in the art, in order to meet contingent needs, could make changes to the invention described above, all of which are within the scope of protection as defined by the following claims.

## Claims

1. A plant (1) for supplying and filling a product (P), preferably a bag, comprising a product transport station (2) extending with respect to a longitudinal axis (X-X), a vertical axis (V-V), and a transverse axis (Y-Y), comprising:
i) a product movement system (3) comprising:
- at least one main track (30), extending longitudinally rectilinearly;
- at least one auxiliary track (39) positioned, preferably vertically and/or transversely, spaced apart from the main track (30), wherein the auxiliary track (39) has the same shape as the main track (30);
- a control device (31), extending longitudinally, being suitable for producing localized magnetic fields;
ii) at least one carriage (4) comprising:
- sliding means (40) comprising at least one base body (401) slidingly engageable with the main track (30) or the auxiliary track (39);
- a control plate (41), engaged with the base body (401), positioned transversely spaced apart facing the control device (31), comprising a magnetically sensitive element (410) stressable and movable by a magnetic field produced by the control device (31);
- at least one transport device (45), engaged with the base body (401) and/or the control plate (41), suitable for supporting a product (P);
in addition, the plant (1) comprises a carriage exchange station (8) positioned at one end of the product movement system (3), wherein the carriage exchange station (8) comprises at least one exchange track (80) on which the carriage (4) is movable and comprises movement means (85) suitable for moving the exchange track (80) between a position in which it is aligned with the main track (30) and a position in which it is aligned with the auxiliary track (39).

2. Plant (1) according to claim 1, comprising a pair of carriage exchange stations (8) positioned at the respective ends of the product movement system (3) suitable for taking a carriage (4) from the main track (30) to move it to the auxiliary track (39) and vice versa, respectively.

3. Plant (1) according to any one of the preceding claims, wherein the auxiliary track (39) has the same shape as the main track (30) so that the carriage (4), and in particular, the base body (401) is slidingly engageable with both the main track (30) and the auxiliary track (39).

4. Plant (1) according to any one of claims 1 to 3, wherein the movement means (85) rotationally move the exchange track (80).

5. Plant (1) according to claim 4, wherein the carriage exchange station (8) comprises a plurality of, at least two, exchange tracks (80) so that while one exchange track (80) is aligned with the main track (30), an additional exchange track (80) is aligned with the auxiliary track (39).

6. Plant (1) according to any one of claims 4 and 5, wherein the movement means (85) comprise a preferably electric motor assembly (850) and a rotatable carousel (855) on which the exchange tracks (80) are housed, wherein said carousel (855) is operatively connected to said electric motor assembly (850).

7. Plant (1) according to any one of claims 1 to 3, wherein the movement means (85) translationally move the exchange track (80), for example vertically.

8. Plant (1) according to claim 7, wherein the movement means (85) comprise a preferably electric motor assembly (850) and a translation assembly (856), operatively connected to said electric motor assembly (850), suitable for transforming the rotary motion of the electric motor assembly (850) into alternating linear motion, wherein the exchange track (80) is housed on said translation assembly (856).

9. Plant (1) according to any one of the preceding claims, wherein the carriage exchange station (8) comprises a longitudinally extending exchange control device (81), being suitable for producing localized magnetic fields by means of which the carriages (4) are moved.

10. Plant (1) according to any one of the preceding claims, wherein the control device (31) comprises a plurality of mutually longitudinally aligned control members (310), each suitable for producing a respective magnetic field.

11. Plant (1) according to any one of the preceding claims, wherein the product movement system (3) comprises two main tracks (30) vertically spaced apart, and the control device (31) is positioned between the two main tracks (30), wherein the sliding means of each carriage (4) comprise two base bodies (401) each slidingly engaged with a respective main track (30).

12. Plant (1) according to any one of the preceding claims, wherein the main track (30) has a substantially rectangular section comprising transverse track surfaces (300) vertically spaced apart, wherein each transverse track surface (300) comprises a longitudinal track slot (340) ;
wherein the base body (401) is slidingly engaged with the main track (30) comprising a track housing (4011) in which the main track (30) is housed and a plurality of sliding balls (405) housed in the base body (401) suitable for sliding in respective longitudinal track slots (340).

13. Plant (1) according to claim 12, wherein the sliding means (40) comprise a plurality of pairs of sliding balls (405) longitudinally spaced apart, wherein each sliding ball (405) of a pair is slidingly housed in the longitudinal track slot (340).

14. Plant (1) according to claim 12 or claim 13, wherein the track housing (4011) comprises transverse body surfaces (4012) facing the transverse track surfaces (300), wherein the sliding balls (405) are housed in the base body (401) protruding from the transverse body surfaces (4012) to be slidingly housed in the longitudinal track slots (340).

15. Plant (1) according to any one of the preceding claims, wherein the transport device (45) comprises at least one transport member (450), preferably a gripper assembly, suitable for operating on the product (P), preferably a bag.

16. Plant (1) according to any one of the preceding claims, wherein the transport device (45) comprises two transport members (450) suitable for operating in two longitudinally spaced apart regions of the same product (P), preferably a bag.

17. Plant (1) according to any one of the preceding claims, comprising at least two carriages (4) movable independently of each other.
